# EUROPÄISCHE PATENTANMELDUNG

(11) **EP 4 640 035 A1**
(43) Veröffentlichungstag der Anmeldung: **29.10.2025**
(21) Anmeldenummer: 25168500.4
(22) Anmeldetag: 04.04.2025
(51) Int. Cl.: A01D 69/00, A01D 69/02, A01D 69/06, A01F 29/14, F16H 47/04

(54) **VORSATZGERÄT**

(30) Priorität: 26.04.2024 DE 102024111814
(71) Anmelder: Maschinenfabrik Bernard Krone GmbH & Co. KG, 48480 Spelle (DE)
(72) Erfinder: Ester, Markus, 49832 Beesten (DE); Ahlmer, Frank, 49492 Westerkappeln (DE); Bolsmann, Martin, 49832 Andervenne (DE); Focks, Tobias, 48480 Spelle (DE)

(57) **Zusammenfassung**

Die Erfindung betrifft ein Vorsatzgerät (1) für eine Landmaschine (70), aufweisend einen Rahmen (2) sowie eine Schneidanordnung (10) zum Schneiden von Erntegut (81) und eine Förderanordnung (20) zum Fördern von Erntegut (81), die gegenüber dem Rahmen (2) antreibbar sind, sowie weiterhin eine Getriebeeinheit (30) mit einem Primär-Eingangsteil (31) zur antriebsübertragenden Kopplung an einen motorischen Primärantrieb (71), einem Sekundär-Eingangsteil (51) zur antriebsübertragenden Kopplung an einen motorischen Sekundärantrieb (27), einem Schneid-Ausgangsteil (56) zur antriebsübertragenden Kopplung an die Schneidanordnung (10), sowie einem Förder-Ausgangsteil (54) zur antriebsübertragenden Kopplung an die Förderanordnung (20). Um einen effizienten und situationsangepassten Betrieb von Förderwerkzeugen und Schneidwerkzeugen eines Vorsatzgeräts zu ermöglichen, ist erfindungsgemäß vorgesehen, dass einer der Ausgangsteile (54, 56) einen Primär-Ausgangsteil (55) bildet und der andere einen Sekundär-Ausgangsteil (53) bildet und die Getriebeeinheit (30) dazu ausgebildet ist, den Primär-Ausgangsteil (55) ausschließlich antriebsübertragend an den Primär-Eingangsteil (31) zu koppeln und den Sekundär-Ausgangsteil (53) gleichzeitig antriebsübertragend an beide Eingangsteile (31, 51) zu koppeln, so dass eine Ausgangsgeschwindigkeit (n4) des Sekundär-Ausgangsteils (53) von Eingangsgeschwindigkeiten (n1, n2) beider Eingangsteile (31, 51) abhängt.

## Beschreibung

Die vorliegende Erfindung betrifft ein Vorsatzgerät nach dem Oberbegriff von Anspruch 1 sowie eine Getriebeeinheit nach dem Oberbegriff von Anspruch 15.

Erntemaschinen werden in der Landwirtschaft eingesetzt, um Erntegut aus dem Bestand zu schneiden, weiterzuverarbeiten und/oder umzuladen. Beispielsweise können mit einem Feldhäcksler Gras, Heu, Mais oder dergleichen geerntet werden. Das Erntegut wird zunächst mit einem Vorsatzgerät oder Erntevorsatz erfasst, der z.B. im Fall von Gras oder Heu das Erntegut vom Boden aufnehmen oder z.B. im Fall von Mais das Erntegut aus dem Bestand ernten kann. Das Vorsatzgerät, welches in der Regel auswechselbar ist, führt das Erntegut zu einer Einzugsvorrichtung, die fest mit dem Feldhäcksler verbaut ist. Ein Vorsatzgerät wie beispielsweise ein Maisgebiss kann einerseits Schneidwerkzeuge aufweisen, die zum Schneiden des Ernteguts dienen, sowie andererseits Förderwerkzeuge, die das Erntegut weiterfördern und insbesondere dem genannten Einzug zuführen.

Die Antriebsleistung für die Werkzeuge des Vorsatzgeräts wird in der Erntemaschine erzeugt und zum Vorsatzgerät übertragen. Dies kann insbesondere mechanisch über eine Zapfwelle erfolgen, evtl. auch hydraulisch oder elektrisch. Bei typischen Erntevorsätzen ist es nur möglich, den Antrieb für die Schneidwerkzeuge sowie für die Förderwerkzeuge gemeinsam ein- und auszuschalten. Dies bedeutet, dass in einer Situation, in welcher die Förderwerkzeuge abgeschaltet werden, beispielsweise bei einem Ladewagenwechsel oder in einem Vorgewende, gleichzeitig auch die Schneidwerkzeuge stehen bleiben. Beim erneuten Anlaufen werden die Schneidwerkzeuge durch zuvor bereits aufgenommenes Erntegut gebremst, was zu einem erhöhten Drehmoment führt. Dieses kann so groß sein, dass eine Überlastkupplung anspricht. Um dies zu vermeiden, muss ggf. bei einem Wagenwechsel das Vorsatzgerät zunächst leer laufen, was wiederum zeitweise zu einer schlechten Häckselqualität führt.

Aufgabe der Erfindung ist es, einen effizienten und situationsangepassten Betrieb von Förderwerkzeugen und Schneidwerkzeugen eines Vorsatzgeräts zu ermöglichen.

Die Aufgabe wird gelöst mit einem Vorsatzgerät mit den Merkmalen des unabhängigen Patentanspruchs 1. Vorteilhafte Ausführungsformen sind den abhängigen Ansprüchen entnehmbar.

Dafür wird ein Vorsatzgerät für eine Landmaschine geschaffen, aufweisend einen Rahmen sowie eine Schneidanordnung zum Schneiden von Erntegut und eine Förderanordnung zum Fördern von Erntegut, die gegenüber dem Rahmen antreibbar sind, sowie weiterhin eine Getriebeeinheit mit einem Primär-Eingangsteil zur antriebsübertragenden Kopplung an einen motorischen Primärantrieb, einem Sekundär-Eingangsteil zur antriebsübertragenden Kopplung an einen motorischen Sekundärantrieb, einem Schneid-Ausgangsteil zur antriebsübertragenden Kopplung an die Schneidanordnung, sowie einem Förder-Ausgangsteil zur antriebsübertragenden Kopplung an die Förderanordnung.

Das Vorsatzgerät ist für eine Landmaschine vorgesehen. Insbesondere kann es sich um eine Erntemaschine handeln, also eine Landmaschine, die landwirtschaftliches Erntegut erntet. Bei dem landwirtschaftlichen Erntegut kann es sich insbesondere um Halmgut wie Gras, Stroh oder Heu handeln, aber z.B. auch um Mais. Dabei bedeutet "ernten" nicht zwangsläufig, dass die Landmaschine das Erntegut aufnimmt, um es z.B. an einen Ladewagen zu übergeben, wenngleich dies eine bevorzugte Möglichkeit darstellt. Allgemein beinhaltet das Ernten ein Entfernen von Pflanzen oder Pflanzenteilen aus dem Bestand, um diese ganz oder teilweise zu nutzen. Insbesondere kann das Vorsatzgerät für einen Feldhäcksler vorgesehen sein. Das Vorsatzgerät ist dazu eingerichtet, lösbar an die Landmaschine angekoppelt zu werden. Dabei ist zum einen eine mechanische Ankopplung möglich, wobei die Landmaschine wenigstens einen Teil des Gewichts des Vorsatzgeräts abstützen kann. Darüber hinaus ist auch eine energieübertragende und/oder antriebsübertragende Kopplung möglich, sowie eine signalübertragende Kopplung. Das Vorsatzgerät selbst dient auch dem Ernteprozess und kann auch als Erntevorsatz bezeichnet werden. Es weist einen Rahmen auf, der zur mechanischen Stabilität beiträgt und zur Aufhängung oder Befestigung anderer Komponenten des Vorsatzgeräts dienen kann. Der Begriff "Rahmen" ist dabei funktional zu verstehen und schließt z.B. nicht aus, dass ein Gehäuse, welches das Vorsatzgerät nach außen hin begrenzt, ganz oder teilweise dem Rahmen zugerechnet wird.

Weiterhin weist das Vorsatzgerät eine Schneidanordnung und eine Förderanordnung auf, die gegenüber dem Rahmen antreibbar sind. Die Schneidanordnung ist zum Schneiden von Erntegut ausgebildet, wobei "Schneiden" jede Form von mechanischem Trennen des Ernteguts beinhaltet. Die Förderanordnung ist zum Fördern von Erntegut ausgebildet, also dazu, Erntegut zu bewegen, wobei ein Trennen allerdings ggf. als Nebeneffekt auftreten kann. Hinsichtlich der Abfolge innerhalb des Ernteprozesses kann das Fördern vor, während oder nach dem Schneiden erfolgen. Z.B. können Pflanzen an die Schneidanordnung herangefördert werden, um von ihr erfasst und geschnitten zu werden. Auch können bereits geschnittene Pflanzen oder Pflanzenteile weitergefördert werden, um entweder weiter geschnitten zu werden oder an eine nachgeordnete Vorrichtung innerhalb oder außerhalb des Vorsatzgeräts übergeben zu werden. Insbesondere kann die Förderanordnung oder ein Teil derselben dazu eingerichtet sein, Erntegut zur Landmaschine hin zu fördern. Von dieser kann das Erntegut dann optional weiterverarbeitet werden, z.B. gepresst, geschnitten, gehäckselt oder dergleichen. Sowohl die Schneidanordnung als auch die Förderanordnung sind gegenüber dem Rahmen antreibbar. Dementsprechend sind sie gegenüber dem Rahmen beweglich und können direkt oder indirekt am Rahmen gelagert sein. Die Beweglichkeit kann eine Translation und/oder Rotation beinhalten. Die Schneidanordnung kann insbesondere wenigstens ein rotierendes Schneidwerkzeug aufweisen. Alternativ oder zusätzlich kann z.B. auch ein oszillierendes Schneidwerkzeug vorgesehen sein. Die Förderanordnung kann insbesondere wenigstens ein als Kettenförderer, Fördertrommel und/oder Förderschnecke ausgebildetes Förderwerkzeug aufweisen.

Das Vorsatzgerät weist weiterhin eine Getriebeeinheit auf. Die Getriebeeinheit kann direkt oder indirekt am Rahmen angeordnet sein. Der Begriff "Einheit" ist hier funktional zu verstehen und bedeutet nicht, dass alle Komponenten der Getriebeeinheit in einem bestimmten Bereich des Vorsatzgeräts angeordnet sein müssen. Die Getriebeeinheit kann ein Getriebegehäuse aufweisen, an welchem verschiedene Getriebekomponenten beweglich gelagert sein können und/oder in welchem sie aufgenommen sein können, um sie vor Verschmutzung und Beschädigung zu schützen. Das Getriebegehäuse kann insbesondere direkt oder indirekt am Rahmen montiert sein. Die Getriebeeinheit weist einen Primär-Eingangsteil auf, zur antriebsübertragenden Kopplung an einen motorischen Primärantrieb, sowie einen Sekundär-Eingangsteil zur antriebsübertragenden Kopplung an einen motorischen Sekundärantrieb. Statt von einem Primär- bzw. Sekundär-Eingangsteil kann man auch von einem Primär- bzw. Sekundäreingangs-Teilgetriebe sprechen. Ebenso können die nachfolgend besprochenen Ausgangsteile auch als Ausgangs-Teilgetriebe bezeichnet werden. Jeder der Antriebs- und Ausgangsteile kann ein oder mehrere Getriebeelemente aufweisen.

Der Primär-Eingangsteil ist zur antriebsübertragenden Kopplung an einen motorischen Primärantrieb ausgebildet. Wenigstens im Betriebszustand ist er antriebsübertragend an den Primärantrieb gekoppelt. D.h. eine im Primärantrieb erzeugte Antriebsleistung wird wenigstens anteilig auf den Primär-Eingangsteil übertragen. Entsprechendes gilt für den Sekundär-Eingangsteil und den Sekundärantrieb. Hier und im Folgenden bezeichnet eine "antriebsübertragende Kopplung" jeweils eine mechanische Kopplung, über die eine Antriebsbewegung und eine Antriebsleistung übertragbar sind. Die Richtung der Bewegung kann dabei ebenso verändert werden wie die Art der Bewegung, also z.B. von translatorisch zu rotatorisch oder umgekehrt. Eine derartige Kopplung kann direkt gegeben sein oder indirekt, also über wenigstens ein zwischengeordnetes Element. Hier und im Folgenden kann eine derartige Kopplung permanent sein, es wäre aber beispielsweise auch ein zeitweises Unterbrechen durch eine Kupplung denkbar. Sowohl der Primärantrieb als auch der Sekundärantrieb sind motorische Antriebe, d.h. sie weisen wenigstens einen Motor auf, der z.B. als Verbrennungsmotor, Elektromotor oder Hydraulikmotor ausgebildet sein kann. Die beiden Antriebe können unterschiedliche Motortypen aufweisen. Jeder der genannten Antriebe kann Teil des Vorsatzgeräts sein, er kann aber auch außerhalb desselben angeordnet sein, insbesondere in der Landmaschine.

Weiterhin weist die Getriebeeinheit einen Schneid-Ausgangsteil auf, zur antriebsübertragenden Kopplung an die Schneidanordnung, sowie einen Förder-Ausgangsteil zur antriebsübertragenden Kopplung an die Förderanordnung. Man kann auch sagen, dass der Schneid-Ausgangsteil dazu eingerichtet ist, wenigstens indirekt die Schneidanordnung anzutreiben und der Förder-Ausgangsteil dazu eingerichtet ist, wenigstens indirekt die Förderanordnung anzutreiben. Je nach Ausführungsform ist es möglich, dass ein bestimmtes Bauteil nicht eindeutig dem Schneid-Ausgangsteil oder aber der Schneidanordnung zugeordnet werden kann. Z.B. könnte eine Welle, auf der ein drehbares Schneidwerkzeug angeordnet ist, wahlweise dem Schneid-Ausgangsteil oder der Schneidanordnung zugeordnet werden. Ähnliches gilt für Förder-Ausgangsteil und Förderanordnung. Insgesamt wird über zwei Eingangsteile Antriebsleistung aus zwei getrennten Antrieben in die Getriebeeinheit eingespeist und über zwei Ausgangsteile an zwei getrennte Anordnungen abgegeben. Insofern kann man sagen, dass die Getriebeeinheit zwei Eingänge und zwei Ausgänge für Antriebsleistung aufweist.

Erfindungsgemäß bildet einer der Ausgangsteile einen Primär-Ausgangsteil und der andere bildet einen Sekundär-Ausgangsteil und die Getriebeeinheit ist dazu ausgebildet, den Primär-Ausgangsteil ausschließlich antriebsübertragend an den Primär-Eingangsteil zu koppeln und den Sekundär-Ausgangsteil gleichzeitig antriebsübertragend an beide Eingangsteile zu koppeln, so dass eine Ausgangsgeschwindigkeit des Sekundär-Ausgangsteils von Eingangsgeschwindigkeiten beider Eingangsteile abhängt. Die Begriffe "Primär" und "Sekundär" dienen sowohl in Bezug auf die Antriebe und Eingangsteile als auch auf die Ausgangsteile lediglich zur begrifflichen Unterscheidung und implizieren ansonsten keinerlei Rangfolge. Derjenige Ausgangsteil, der den Primär-Ausgangsteil bildet, kann von der Getriebeeinheit ausschließlich antriebsübertragend an den Primär-Eingangsteil gekoppelt werden. Er bezieht somit seine Antriebsleistung ausschließlich aus dem Primärantrieb. Derjenige Ausgangsteil, der den Sekundär-Ausgangsteil bildet, kann von der Getriebeeinheit gleichzeitig antriebsübertragend an den Primär-Eingangsteil und den Sekundär-Eingangsteil gekoppelt werden. Er kann somit seine Antriebsleistung aus beiden Antrieben beziehen.

Allerdings erfolgt kein einfaches Zusammenwirken in der Art, dass der Primärantrieb durch den Sekundärantrieb unterstützt wird. Vielmehr hängt eine Ausgangsgeschwindigkeit des Sekundär-Ausgangs sowohl von einer Eingangsgeschwindigkeit des Primärantriebs als auch von einer Eingangsgeschwindigkeit des Sekundärantriebs ab. Nachfolgend werden für die genannten Geschwindigkeiten auch die Bezeichnungen Sekundär-Ausgangsgeschwindigkeit, Primär-Eingangsgeschwindigkeit und Sekundär-Eingangsgeschwindigkeit benutzt. Durch die erfindungsgemäße Ausgestaltung der Getriebeeinheit ist einer bestimmten Primär-Eingangsgeschwindigkeit keine Sekundär-Ausgangsgeschwindigkeit eindeutig zugeordnet. Vielmehr hängt letztere zusätzlich von der Sekundär-Eingangsgeschwindigkeit ab. Ebenso wenig kann einer Sekundär-Eingangsgeschwindigkeit eindeutig eine Sekundär-Ausgangsgeschwindigkeit zugeordnet werden. Die Sekundär-Ausgangsgeschwindigkeit ergibt sich also durch das Zusammenspiel der beiden Eingangsgeschwindigkeiten, die über die beiden Antriebe unabhängig voneinander einstellbar sind. Die hier als "Geschwindigkeit" bezeichneten Größen müssen nicht die Dimension einer physikalischen Geschwindigkeit haben. Es kann sich insbesondere z.B. auch um Drehzahlen, Winkelgeschwindigkeiten oder dergleichen handeln. Jede der Geschwindigkeiten kann durch einen Betrag sowie eine Richtung oder ein Vorzeichen charakterisiert werden. Der Betrag gibt an, wie schnell sich der entsprechende Teil bewegt, das Vorzeichen gibt an, in welche Richtung (z.B. in welchem Drehsinn) er sich bewegt.

Die Ausgangsgeschwindigkeit des Primär-Ausgangsteils, welche auch als Primär-Ausgangsgeschwindigkeit bezeichnet werden kann, ist unabhängig von der Sekundär-Eingangsgeschwindigkeit. Sie hängt bevorzugt in eindeutiger Weise von der Primär-Eingangsgeschwindigkeit ab, wenngleich es denkbar wäre, dass sie beispielsweise durch eine veränderbare Übersetzung innerhalb der Getriebeeinheit beeinflusst werden kann.

Da die oben beschriebene Abhängigkeit von beiden Eingangsgeschwindigkeiten gegeben ist, ist bei einer gegebenen Primär-Eingangsgeschwindigkeit die Sekundär-Ausgangsgeschwindigkeit in Abhängigkeit von der Sekundär-Eingangsgeschwindigkeit veränderbar. Somit kann die Primär-Eingangsgeschwindigkeit beibehalten werden, was zu einer gleichbleibenden Ausgangsgeschwindigkeit des Primär-Ausgangsteils führt, während gleichzeitig die Ausgangsgeschwindigkeit des Sekundär-Ausgangsteils über den Sekundärantrieb verändert werden kann. Somit können die Betriebsgeschwindigkeiten der Förderanordnung einerseits und der Schneidanordnung andererseits voneinander unabhängig situationsbedingt eingestellt werden. Andererseits erfolgt eine Antriebsübertragung von beiden Eingangsteilen auf den Sekundär-Ausgangsteil. Dies bedeutet, dass der Sekundärantrieb zumindest in bestimmten Situationen leistungsmäßig entlastet wird. Er kann u.U. weniger leistungsstark und somit leichter und kompakter ausgelegt werden, als wenn er den Sekundär-Eingangsteil dauerhaft allein antreiben müsste. Es sind auch Situationen denkbar, in denen der Sekundärantrieb abgeschaltet wird. Bevorzugt ist der Sekundär-Ausgangsteil bei Stillstand des Sekundärantriebs allein durch Primärantrieb antreibbar. Dabei wäre auch denkbar, dass bei einem zeitweisen Ausfall des Sekundärantriebs trotzdem sowohl die Schneidanordnung als auch die Förderanordnung betrieben werden können. Dies wäre nicht möglich, wenn der Sekundär-Ausgangsteil nur an den Sekundär-Eingangsteil gekoppelt wäre. Auch kann der Sekundärantrieb im Hinblick darauf ausgewählt werden, dass durch ihn die Ausgangsgeschwindigkeit des Sekundär-Ausgangsteils beeinflusst werden soll. Z.B. könnte vorgesehen sein, dass sich seine Eingangsgeschwindigkeit leicht verändern lässt oder präzise einstellen lässt. Der Primärantrieb könnte demgegenüber beispielsweise für eine hohe Leistung bei gleichbleibender Eingangsgeschwindigkeit ausgelegt sein oder dergleichen.

Bevorzugt ist vorgesehen, dass der Schneid-Ausgangsteil den Primär-Ausgangsteil bildet und der Förder-Ausgangsteil den Sekundär-Ausgangsteil bildet. D.h. der Schneid-Ausgangsteil ist antriebsübertragend nur an den Primär-Eingangsteil gekoppelt, während der Förder-Ausgangsteil sowohl an den Primär- als auch den Sekundär-Eingangsteil gekoppelt ist. Somit hängt die Ausgangsgeschwindigkeit des Förder-Ausgangsteils, welche nachfolgend auch als Fördergeschwindigkeit bezeichnet wird, sowohl von der Primär-Eingangsgeschwindigkeit als auch von der Sekundär-Eingangsgeschwindigkeit ab. Somit hängt die Laufgeschwindigkeit der Schneidanordnung nur von der Betriebsgeschwindigkeit des Primärantriebs ab, während die Laufgeschwindigkeit der Förderanordnung von den Laufgeschwindigkeiten beider Antriebe abhängt. Insbesondere kann die Fördergeschwindigkeit bei gegebener Primär-Eingangsgeschwindigkeit durch Veränderung der Sekundär-Eingangsgeschwindigkeit verändert werden.

Aufgrund der Abhängigkeit der Ausgangsgeschwindigkeit des Sekundär-Ausgangsteils sowohl von der Eingangsgeschwindigkeit des Primär-Eingangsteils als auch von der des Sekundär-Eingangsteils sind unterschiedliche Variationsmöglichkeiten denkbar. In jedem Fall kann bei einer gegebenen Eingangsgeschwindigkeit des Primär-Eingangsteils die Ausgangsgeschwindigkeit verändert werden, indem die Eingangsgeschwindigkeit des Sekundär-Eingangsteils verändert wird. Je nach Ausführungsform kann die Ausgangsgeschwindigkeit innerhalb engerer oder weiterer Grenzen veränderbar sein. Dies hängt z.B. davon ab, inwieweit die Eingangsgeschwindigkeit des Sekundär-Eingangsteils veränderbar ist. Bevorzugt ist die Ausgangsgeschwindigkeit des Sekundär-Ausgangsteils bei laufendem Primärantrieb durch den Sekundärantrieb reduzierbar. D.h., der Sekundärantrieb ist derart betreibbar, dass die Ausgangsgeschwindigkeit im Vergleich zu einem Zustand mit deaktiviertem Sekundärantrieb reduziert ist. Dies schließt nicht aus, dass der Sekundärantrieb auch betrieben werden kann, um die Ausgangsgeschwindigkeit zu erhöhen. Bevorzugt ist die Ausgangsgeschwindigkeit durch den Sekundärantrieb auf Null reduzierbar. D.h., der Sekundär-Ausgang kann trotz laufendem Primärantrieb zum Stillstand gebracht werden, indem der Sekundärantrieb in geeigneter Weise betrieben wird. In Bezug auf den Sekundär-Ausgang heben sich die Antriebswirkungen beider Antriebe in diesem Fall auf. Wenn wie oben beschrieben, der Förder-Ausgang den Sekundär-Ausgang bildet, kann die Förderanordnung bei laufendem Primärantrieb völlig stillgelegt werden. Hierdurch kann verhindert werden, dass Erntegut eingefördert wird, während beispielsweise gleichzeitig im Bereich der Schneidanordnung befindliches Erntegut weiter geschnitten werden kann. Eine Blockade oder Probleme im Zusammenhang mit einem Wiederanlaufen der Förderanordnung sind daher unwahrscheinlich. Zusätzlich oder alternativ ist es vorteilhaft, wenn die Ausgangsgeschwindigkeit des Sekundär-Ausgangsteils bei laufendem Primärantrieb durch den Sekundärantrieb umkehrbar ist. "Umkehrbar" bedeutet hierbei, dass die Sekundär-Ausgangsgeschwindigkeit das Vorzeichen wechselt, also die Richtung wechselt. Im Fall einer Rotation wechselt die Drehrichtung. Somit könnte beispielsweise eine Förderanordnung rückläufig betrieben werden, während die Schneidanordnung durchgehend in gleichbleibender Richtung und ggf. mit gleichbleibender Geschwindigkeit betrieben wird. Ein solches rückläufiges Betreiben der Förderanordnung könnte dazu dienen, eine mögliche Blockade zu vermeiden oder auch zu beheben.

Vorteilhaft kann der Primär-Eingangsteil eine Kupplung aufweisen, die zur lösbaren Verbindung mit einem bezüglich des Vorsatzgeräts externen Primärantrieb ausgebildet ist. Der Primärantrieb ist in diesem Fall nicht Teil des Vorsatzgeräts, sondern ist außerhalb desselben angeordnet. Insbesondere kann die Landmaschine, an welche das Vorsatzgerät angekoppelt wird, den Primärantrieb aufweisen. Der Primärantrieb kann neben Komponenten zur Kraftübertragung einen Motor aufweisen, der z.B. als Verbrennungsmotor, Elektromotor oder Hydraulikmotor ausgebildet sein kann. Der Motor kann auch als Energiequelle für den Fahrantrieb der Landmaschine dienen. Der Primär-Eingangsteil weist einen Kupplung auf, die zum Eingreifen mit einer entsprechenden Kupplung auf Seiten des Primärantriebs, also insbesondere auf Seiten der Landmaschine, ausgebildet ist. Es erfolgt also eine mechanische Energieübertragung oder Leistungsübertragung auf das Vorsatzgerät. Die Verbindung ist bevorzugt drehmomentübertragend, ggf. auch drehfest. Auf Seiten der Landmaschine kann einen Zapfwelle ausgebildet sein mit einem Profil, das komplementär zum Profil der Kupplung des Vorsatzgerätes ist. Z.B. kann der Primärantrieb eine Klauenkupplung aufweisen, über die ein Antriebsdrehmoment zum Vorsatzgerät übertragen wird. Die Kupplung kann z.B. an einer Gelenkwelle ausgebildet sein, um evtl. Positionsveränderungen zwischen Vorsatzgerät und Landmaschine auszugleichen. Während des Erntevorgangs kann der Primärantrieb durchgehend in Betrieb sein, so dass über die Kupplung durchgehend eine Bewegungsübertragung auf den Primär-Eingangsteil erfolgt. Dementsprechend kann auch der Primär-Ausgangsteil durchgehend in Bewegung bleiben. Soweit es sich um den Schneid-Ausgangsteil handelt, bleibt die Schneidanordnung durchgehend in Bewegung.

Der Sekundärantrieb könnte auch ein im obigen Sinn externer Antrieb sein, der hinsichtlich seiner Betriebsgeschwindigkeit unabhängig vom Primärantrieb ist. Es ist allerdings bevorzugt, dass das Vorsatzgerät den Sekundärantrieb aufweist. Der Sekundärantrieb kann einen Motor aufweisen, der z.B. als Hydraulikmotor, Elektromotor oder Verbrennungsmotor ausgebildet sein kann. In jedem Fall ist der Sekundärantrieb bei dieser Ausführungsform Teil des Vorsatzgeräts. Er kann insbesondere am Rahmen montiert sein. Auf diese Weise kann der Rahmen die auf den Sekundärantrieb einwirkenden Kräfte und die durch ihn ausgeübten Kräfte optimal aufnehmen. Der Sekundärantrieb kann bevorzugt stationär am Rahmen montiert sein, es wäre aber auch eine bezüglich des Rahmens bewegliche Lagerung denkbar. Ebenfalls bevorzugt kann der Sekundärantrieb durch Energieübertragung von der Landmaschine betreibbar sein. D.h. die Energie zum Betreiben des Sekundärantriebs wird nicht innerhalb des Vorsatzgeräts erzeugt, sondern innerhalb der Landmaschine. Das Vorsatzgerät weist in diesem Fall Mittel zur Energieübertragung von der Landmaschine auf. Im Fall eines Elektromotors können diese Mittel elektrische Anschlusskabel und eine Schnittstelle zur Verbindung mit der Landmaschine aufweisen. Im Fall eines Hydraulikmotors können die Mittel insbesondere Hydraulikleitungen und -anschlüsse aufweisen. Es versteht sich, dass die Energieübertragung von der Landmaschine einen kompaktere und leichtere Bauweise des Vorsatzgeräts ermöglicht, da es keinerlei Energiespeicher benötigt.

Bevorzugt weist die Getriebeeinheit ein Kombinationsgetriebe auf, welches ein antriebsübertragend an den Primär-Eingangsteil gekoppeltes erstes Eingangselement aufweist, ein antriebsübertragend an den Sekundär-Eingangsteil gekoppeltes zweites Eingangselement, sowie ein Ausgangselement des Sekundär-Ausgangsteils, welches wenigstens indirekt mit beiden Eingangselementen zusammenwirkt. Jedes der beiden Eingangselemente sowie das Ausgangselement kann insbesondere als Zahnrad ausgebildet sein. In diesem Fall kann man sie auch als erstes Eingangszahnrad, zweites Eingangszahnrad und/oder Ausgangszahnrad bezeichnen. Es sind aber auch andere Ausgestaltungen denkbar. Das Kombinationsgetriebe bildet einen Teil der Getriebeeinheit. Das erste Eingangselement ist antriebsübertragend an den Primär-Eingangsteil gekoppelt und das zweite Eingangselement ist antriebsübertragend an den Sekundär-Eingangsteil gekoppelt, was jeweils die Möglichkeit einer starren Verbindung einschließt. Es könnte sich aber z.B. auch um ein mechanisches Zusammenwirken zweier Zahnräder handeln. Aufgrund der genannten Kopplungen nimmt das Kombinationsgetriebe einen Kraftfluss vom Primär-Eingangsteil auf und einen Kraftfluss vom Sekundär-Eingangsteil. Diese Kraftflüsse werden somit kombiniert, was durch die Bezeichnung "Kombinationsgetriebe" angedeutet wird.

Gemäß einer vorteilhaften Ausgestaltung weist die Getriebeeinheit ein Aufteilungsgetriebe auf, welches antriebsübertragend an den Primär-Eingangsteil sowie an das Kombinationsgetriebe und den Primär-Ausgangsteil gekoppelt ist und einen vom Primär-Eingangsteil kommenden Kraftfluss aufteilt zwischen dem Kombinationsgetriebe und dem Primär-Ausgangsteil. Das Aufteilungsgetriebe ist an den Primär-Eingangsteil gekoppelt und kann seitens des Primärantriebs über den Primär-Eingangsteil angetrieben werden. Andererseits ist es sowohl an den Primär-Ausgangsteil als auch an das Kombinationsgetriebe gekoppelt. Es empfängt einen Kraftfluss sowie eine Antriebsleistung vom Primär-Eingangsteil teilt diese auf, und gibt einen Teil an den Primär-Ausgangsteil weiter und einen anderen Teil an das Kombinationsgetriebe. Insgesamt erfolgt eine Aufteilung der Antriebsleistung des Primärantriebs im Aufteilungsgetriebe, wonach ein Teil dieser Antriebsleistung im Kombinationsgetriebe mit der Antriebsleistung des Sekundärantriebs kombiniert wird.

In einer Ausführungsform weist das Aufteilungsgetriebe eine Aufteilungswelle auf, die einerseits antriebsübertragend an den Primär-Eingangsteil und andererseits antriebsübertragend an den Primär-Ausgangsteil gekoppelt ist und mit welcher ein erstes Aufteilungsrad verbunden ist, welches mit einem zweiten Aufteilungsrad zusammenwirkt und hierdurch antriebsübertragend an das Kombinationsgetriebe gekoppelt ist. Die Aufteilungswelle kann beispielsweise am Rahmen oder am Getriebegehäuse drehbar gelagert sein. Dabei ist es möglich, dass die Aufteilungswelle drehfest mit einem Element des Primär-Eingangsteils verbunden ist. Sie könnte sogar einstückig hiermit ausgebildet sein, beispielsweise derart, dass ein Endabschnitt der Aufteilungswelle zum Primär-Eingangsteil gehört. Andererseits ist die Aufteilungswelle mit dem Primär-Ausgangsteil gekoppelt, wobei wiederum eine drehfeste oder sogar einstückige Verbindung denkbar wäre. Außerdem ist ein erstes Aufteilungsrad mit der Aufteilungswelle verbunden. Die Verbindung ist bevorzugt verdrehsicher oder drehfest, was auch die Möglichkeit einer einstückige Verbindung einschließt. Dementsprechend dreht sich das erste Aufteilungsrad synchron mit der Aufteilungswelle. Es wirkt mit dem zweiten Aufteilungsrad zusammen, d.h. es kämmt mit diesem. Die beiden Aufteilungsräder sind Zahnräder, wobei jedes insbesondere als Stirnrad, Kegelrad oder Kronenrad ausgebildet sein kann. Das zweite Aufteilungsrad kann zum Kombinationsgetriebe gehören, es kann aber auch ein Zwischenelement zwischen erstem Aufteilungsrad und Kombinationsgetriebe bilden. Unter anderem durch die Ausgestaltung der Aufteilungsräder lassen sich unterschiedliche Anordnungen des Kombinationsgetriebes in Relation zur Aufteilungswelle realisieren.

Es sind unterschiedliche Ausgestaltungen des Kombinationsgetriebes denkbar. Beispielsweise wäre es als Zykloidengetriebe, Kegelrad- oder Stirnradgetriebe realisierbar. Gemäß einer vorteilhaften Ausgestaltung ist das Kombinationsgetriebe als Planetengetriebe ausgebildet, welches ein Hohlrad, ein Sonnenrad und eine Mehrzahl von an einem Planetenträger gelagerten Planetenrädern aufweist. Das Sonnenrad, der Planetenträger und das Hohlrad können relativ zueinander um eine gemeinsame Getriebeachse rotieren. Zusätzlich sind die Planetenräder, die mit dem Sonnenrad und dem Hohlrad zusammenwirken, um Planetenachsen drehbar am Planetenträger gelagert. Bekanntermaßen kann ein derartiges Planetengetriebe genutzt werden, um ein Unter- oder Übersetzung einer Rotationsbewegung zu realisieren, aber auch um zwei Rotationsbewegungen zu überlagern und hierdurch eine dritte Rotationsbewegung zu erzeugen. Vor allem letztere Funktion kann vorliegend genutzt werden. Allgemein ist jeweils eines der drei Elemente Sonnenrad, Hohlrad und Planetenträger an den Primär-Eingangsteil gekoppelt, eines an den Sekundär-Eingangsteil, und das dritte ist an den Sekundär-Ausgangsteil gekoppelt oder Teil desselben. Sie stellen somit das erste Eingangselement, das zweite Eingangselement und das Ausgangselement des Kombinationsgetriebes dar. Dabei sind unterschiedliche Kombinationen denkbar, von denen einige nachfolgend genannt werden, ohne dass die sinnvolle Nutzbarkeit eines Planetengetriebes im Rahmen der Erfindung hierauf beschränkt wäre.

Gemäß einer vorteilhaften Ausgestaltung ist das Sonnenrad antriebsübertragend an den Primär-Eingangsteil gekoppelt. Dies kann insbesondere dadurch realisiert sein, dass das o.g. zweite Aufteilungsrad drehfest mit dem Sonnenrad verbunden ist, beispielsweise durch eine gemeinsame Welle. Es wäre aber beispielsweise auch denkbar, eine Welle durch das Sonnenrad hindurchzuführen und auf einer dem Primär-Eingangsteil hinsichtlich des Kraftflusses gegenüberliegenden Seite an den Primär-Eingangsteil zu koppeln. In diesem Fall könnte auf das o.g. Aufteilungsgetriebe verzichtet werden.

Weiterhin vorteilhaft kann der Sekundär-Ausgangsteil den Planetenträger oder das Hohlrad aufweisen. In beiden Fällen kann das Sonnenrad an den Primär-Eingangsteil gekoppelt sein. Es wäre aber auch denkbar, dass der Primär-Eingangsteil im ersteren Fall an das Hohlrad und im letzteren Fall an den Planetenträger gekoppelt ist.

Bevorzugt kann der Sekundär-Eingangsteil antriebsübertragend an das Hohlrad oder an den Planetenträger gekoppelt sein. Insbesondere kann in beiden Fällen das Sonnenrad an den Primär-Eingangsteil gekoppelt sein. Im ersteren Fall weist dann der Sekundär-Ausgangsteil den Planetenträger auf und im letzteren Fall weist er das Hohlrad auf.

Der Sekundär-Eingangsteil kann ein mit dem Sekundärantrieb drehfest verbundenes Antriebsrad aufweisen, welches wenigstens indirekt mit dem Hohlrad zusammenwirkt.

Das Zusammenwirken kann indirekt erfolgen, z.B. über wenigstens ein zwischengeordnetes weiteres Zahnrad. Bevorzugt ist allerdings ein direktes Zusammenwirken. Dabei kämmt das Antriebsrad mit dem Hohlrad, welches zu diesem Zweck einen weiteren Zahnkranz aufweisen muss, zusätzlich zu demjenigen, mit dem die Planetenräder zusammenwirken. Der Zahnkranz kann nach Art eines Stirnrads bezüglich der Getriebeachse radial außen angeordnet sein, aber z.B. auch nach Art eines Kronenrads axial einerseits des Hohlrads oder nach Art eines Kegelrads axialradial. Alternativ kann das Antriebsrad wenigstens indirekt mit dem Planetenträger zusammenwirken. Für ein direktes Zusammenwirken muss der Planetenträger mit einem Zahnkranz versehen sein. Diese Bauform kann allerdings aus Bauraumgründen u.U. schwierig zu realisieren sein. Alternativ kann das Antriebsrad z.B. mit einem Trägerrad zusammenwirken, das drehfest mit dem Planetenträger verbunden ist. Das Trägerrad ist axial vom Planetenträger beabstandet und ermöglicht ein Zusammenwirken mit dem Antriebsrad, ohne die Funktion des Planetengetriebes zu beeinträchtigen.

Die Förderanordnung kann eine Mehrzahl von einzeln gegenüber dem Rahmen beweglichen Förderwerkzeugen aufweisen. Die einzelnen Förderwerkzeuge können z.B. als rotierende Förderscheiben ausgebildet sein. Diese können einzeln an den Förder-Ausgangsteil gekoppelt sein, oder eine erste Förderscheibe ist an den Förder-Ausgangsteil gekoppelt, eine zweite Förderscheibe ist an die erste Förderscheibe gekoppelt etc. Auch Mischformen sind denkbar. Insbesondere kann die Förderanordnung wenigstens einen Kettenförderer aufweisen, der eine Mehrzahl von Förderwerkzeugen aufweist. Letztere können z.B. als Förderzinken ausgebildet sein. Dabei kann ein Kettenantriebsrad des Kettenförderers antriebsübertragend an den Förder-Ausgangsteil gekoppelt sein. Des Weiteren kann die Schneidanordnung eine Mehrzahl von einzeln gegenüber dem Rahmen beweglichen Schneidwerkzeugen aufweisen. Bei den Schneidwerkzeugen kann es sich um drehbar gelagerte Schneidscheiben handeln. Einzelne Schneidwerkzeuge können einzeln an den Schneid-Ausgangsteil gekoppelt sein, alternativ oder zusätzlich ist aber auch eine Kopplung zwischen Schneidwerkzeugen denkbar. Je nach Bauform kann das Vorsatzgerät auch eine Mehrzahl von Schneidanordnungen und/oder eine Mehrzahl von Förderanordnungen aufweisen. Entsprechend kann es eine Mehrzahl von Sekundär-Eingangsteilen aufweisen, wobei jedem ein eigener Sekundärantrieb zugeordnet sein kann.

Die Aufgabe wird weiterhin gelöst mit einer Getriebeeinheit für ein Vorsatzgerät für eine Landmaschine, wobei die Getriebeeinheit einen Primär-Eingangsteil zur antriebsübertragenden Kopplung an einen motorischen Primärantrieb aufweist, einen Sekundär-Eingangsteil zur antriebsübertragenden Kopplung an einen motorischen Sekundärantrieb, einen Schneid-Ausgangsteil, der dazu ausgebildet ist, wenigstens indirekt eine Schneidanordnung des Vorsatzgeräts anzutreiben, sowie einen Förder-Ausgangsteil, der dazu ausgebildet ist, wenigstens indirekt eine Förderanordnung des Vorsatzgeräts anzutreiben. Erfindungsgemäß bildet einer der Ausgangsteile einen Primär-Ausgangsteil und der andere bildet einen Sekundär-Ausgangsteil und die Getriebeeinheit ist dazu ausgebildet, den Primär-Ausgangsteil ausschließlich antriebsübertragend an den Primär-Eingangsteil zu koppeln und den Sekundär-Ausgangsteil gleichzeitig antriebsübertragend an beide Eingangsteile zu koppeln, so dass eine Ausgangsgeschwindigkeit des Sekundär-Ausgangsteils von Eingangsgeschwindigkeiten beider Eingangsteile abhängt.

Die genannten Begriffe wurden mit Bezug auf das erfindungsgemäße Vorsatzgerät erläutert und werden daher nicht nochmals erklärt. Vorteilhafte Ausgestaltungen der erfindungsgemäßen Rundballenpresse entsprechen denen des erfindungsgemäßen Vorsatzgeräts.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine schematisierte Draufsicht einer Landmaschine mit einem erfindungsgemäßen Vorsatzgerät; sowie
- Fig. 2-4: perspektivische Darstellungen von Teilen des Vorsatzgeräts aus Fig.1 mit einer erfindungsgemäßen Getriebeeinheit.

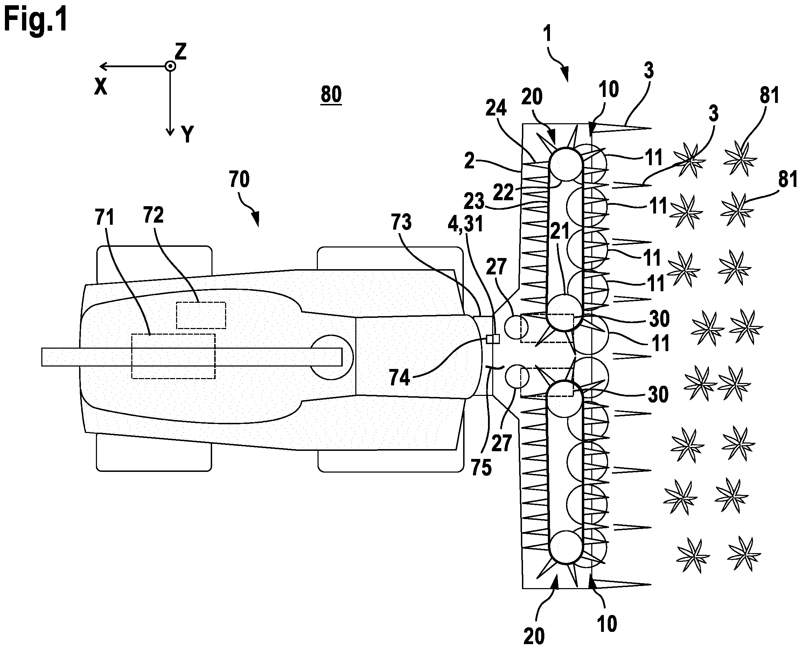

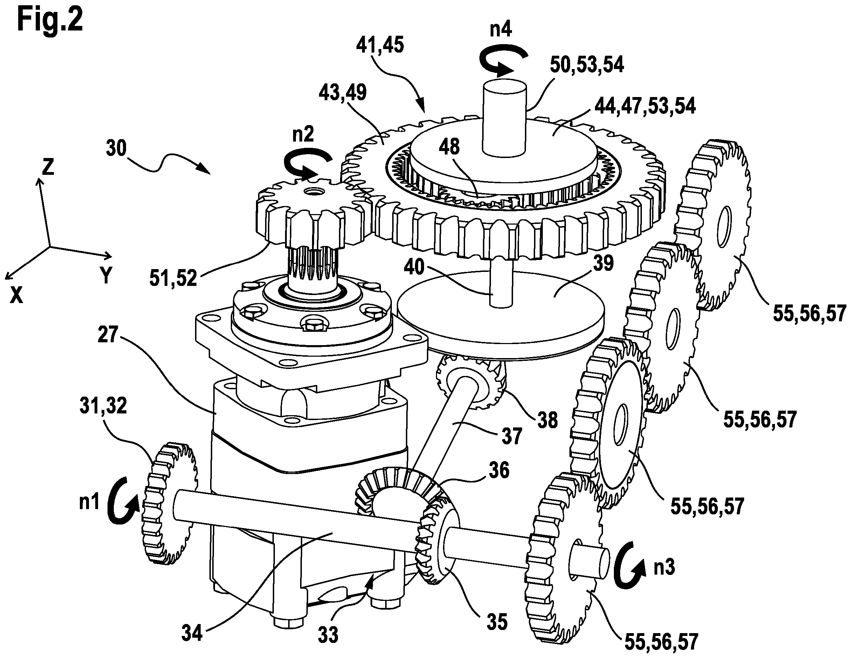

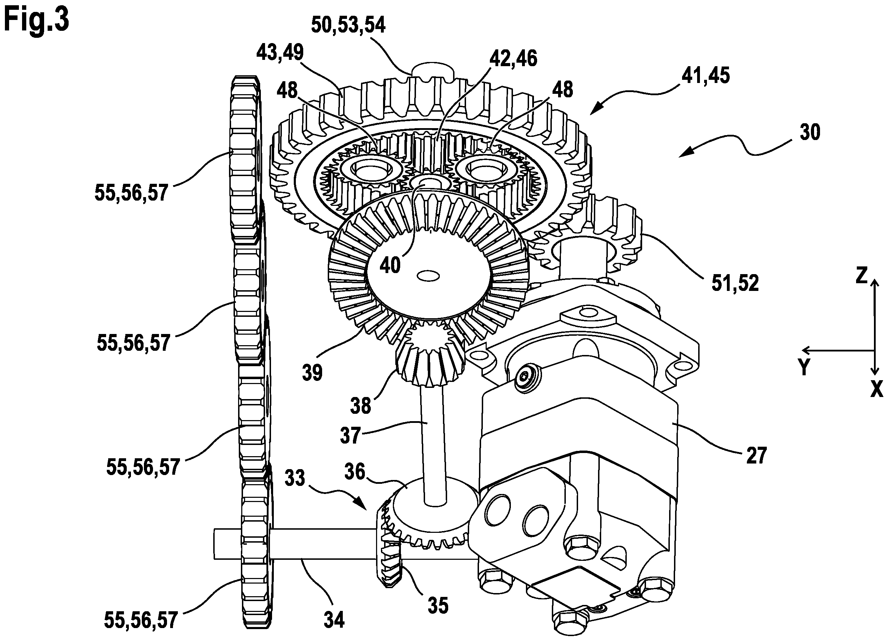

Fig. 1 zeigt eine Landmaschine, genauer gesagt einen Feldhäcksler 70, auf einem Feld 80 mit Erntegut 81, z.B. Mais. Der Feldhäcksler 70 weist einen Verbrennungsmotor auf, der einen motorischen Primärantrieb 71 bildet. Der Primärantrieb 71 treibt die Räder des Feldhäckslers 70 an. Außerdem treibt er eine Hydraulikpumpe 72 an, die hydraulische Energie zur Verfügung stellt. Zudem wird eine Zapfwelle 74 an einer Vorderseite eines Einzugs 73 mechanisch durch den Primärantrieb 71 angetrieben. Am Einzug 73 ist ein Vorsatzgerät 1, in diesem Fall ein Maisgebiss, an den Feldhäcksler 1 angekoppelt. In den Figuren sind jeweils eine Längsachse X, eine Querachse Y sowie eine Hochachse Z des Feldhäckslers 70 eingezeichnet, wobei sich diese in Fig.2-4 auf den am Feldhäcksler 70 angebauten Zustand des Vorsatzgeräts 1 beziehen.

Das Vorsatzgerät 1 weist einen Rahmen 2 auf, der wesentlich für dessen mechanische Stabilität ist. Bezüglich der Längsachse X vorderseitig weist der Rahmen 2 eine Mehrzahl von Spitzen 3 auf, die dazu vorgesehen sind, sich beim Erntevorgang zwischen den Reihen des Ernteguts 81 zu bewegen. Am Rahmen 2 sind - teilweise unter einer nicht bezeichneten Verkleidung - zwei Schneidanordnungen 10 sowie zwei Förderanordnungen 20 gelagert. Jeweils einer Schneidanordnung 10 und einer Förderanordnung 20 sind eine Getriebeeinheit 30 und ein Sekundärantrieb 27 zugeordnet. Jede Schneidanordnung 10 weist eine Mehrzahl von drehbar gelagerten Schneidscheiben 11 auf, die dazu dienen, Erntegut 81 zu schneiden. Das Erntegut 81 wird von der Förderanordnung 20 bezüglich der Querachse Y zur Mitte des Vorsatzgeräts 1 und weiter zum Einzug 73 gefördert. Dort kann es übernommen und vom Feldhäcksler in bekannter Weise weiterverarbeitet werden. Jede Förderanordnung 20 ist nach Art eines Kettenförderers ausgebildet und weist eine Förderkette 23 auf, die über ein antreibbares Förderantriebsrad 21 und ein mitlaufendes Förderlaufrad 22 geführt ist. Eine Mehrzahl von Förderzinken 24 sind mit einzelnen Gliedern der Förderkette 23 verbunden. Sie dienen dazu, Erntegut 81 zu ergreifen und entsprechend der Laufrichtung des Kettenförderers zu transportieren.

Der Aufbau des Vorsatzgerätes 1 ist symmetrisch, weshalb nachfolgend lediglich eine Getriebeeinheit 30 sowie die hiermit verbundenen Komponenten besprochen werden. Die Getriebeeinheit 30 kann wenigstens teilweise in einem Getriebegehäuse angeordnet sein, welches in Fig. 2 - 4 weggelassen wurde, um den inneren Aufbau der Getriebeeinheit 30 darzustellen. Die Getriebeeinheit 30 weist einen Primär-Eingangsteil 31 auf, der zur antriebsübertragenden Kopplung an den Primärantrieb 71 ausgebildet ist. Hierzu weist er insbesondere eine Kupplung 4 auf, die formschlüssig mit der Zapfwelle 74 eingreift. Die Kupplung 4 ist in hier nicht dargestellter Weise antriebsübertragend mit einem Eingangsrad 32 gekoppelt, welches mit einer Primär-Eingangsgeschwindigkeit n1 läuft. Die Primär-Eingangsgeschwindigkeit n1 ebenso wie die weiteren nachfolgend genannten Geschwindigkeiten haben im vorliegenden Fall die Dimension einer Drehzahl. Das Eingangsrad 32 sitzt drehfest auf einer Aufteilungswelle 34 eines Aufteilungsgetriebes 33. Des Weiteren sind ein erstes Aufteilungsrad 35, welches als Kegelrad ausgebildet ist, sowie einen erstes von mehreren Übertragungsrädern 57 drehfest mit der Aufteilungswelle 34 verbunden. Die Übertragungsräder 57 gehören zu einem Schneid-Ausgangsteil 56 der Getriebeeinheit 30, der antriebsübertragend an die Schneidanordnung 10 gekoppelt ist. Er bildet vorliegend einen Primär-Ausgangsteil 55 der Getriebeeinheit 30. Das erste Übertragungsrad 57 läuft mit einer Primär-Ausgangsgeschwindigkeit n3, die bei dieser Ausführungsform identisch zur Primär-Eingangsgeschwindigkeit n1 ist.

Das erste Aufteilungsrad 35 wirkt mit einem ebenfalls als Kegelrad ausgebildeten zweiten Aufteilungsrad 36 zusammen. Dieses ist über eine erste Welle 37 drehfest mit einem ersten Kegelrad 38 verbunden. Das erste Kegelrad 38 wiederum kämmt mit einem zweiten Kegelrad 39, das über eine zweite Welle 40 drehfest mit einem Sonnenrad 46 verbunden ist. Das Sonnenrad 46 ist Teil eines Planetengetriebes 45, welches des Weiteren einen Planetenträger 47 mit drei Planetenrädern 48 und ein Hohlrad 49 aufweist. Das Planetengetriebe 45 bildet ein Kombinationsgetriebe 41, innerhalb dessen das Sonnenrad 46 ein erstes Eingangselement 42 bildet, das Hohlrad 49 ein zweites Eingangselement 43 und der Planetenträger 47 ein Ausgangselement 44. Das Hohlrad 49 weist eine äußere Stirnverzahnung auf, über die es mit einem Antriebsrad 52 eines Sekundär-Eingangsteils 51 kämmt. Das Antriebsrad 52 ist drehfest mit dem Sekundärantrieb 27 verbunden, der im vorliegenden Fall als Hydraulikmotor ausgebildet ist. Er ist u.a. über eine in Fig. 1 schematisch dargestellte Hydraulikleitung 75 mit der Hydraulikpumpe 72 verbunden. Der Sekundär-Eingangsteil 51, genauer gesagt das Antriebsrad 52, wird mit einer Sekundär-Eingangsgeschwindigkeit n2 betrieben. Diese ist unabhängig von der Primär-Eingangsgeschwindigkeit n1 einstellbar und kann nicht nur hinsichtlich ihres Betrages, sondern auch hinsichtlich ihres Vorzeichens verändert werden. Der Planetenträger 47 sowie eine mit diesem verbundene dritte Welle 50 gehören zu einem Förder-Ausgangsteil 54, der vorliegend einen Sekundär-Ausgangsteil 53 bildet. Er ist antriebsübertragend an die Förderanordnung 20 gekoppelt.

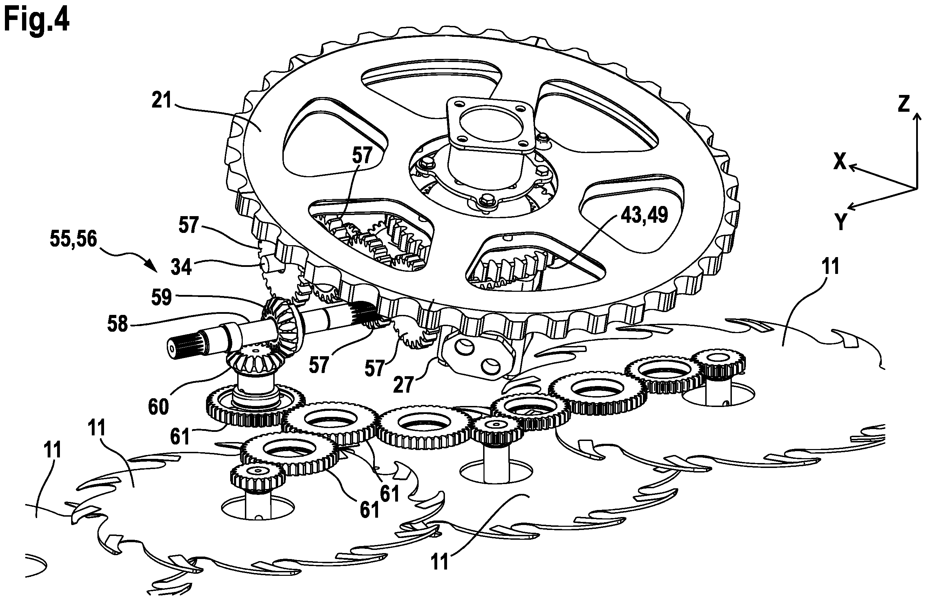

Wie in Fig. 4 erkennbar ist, ist das Förderantriebsrad 21 koaxial zum Planetenträger 47 gelagert, wobei es drehfest mit diesem verbunden ist. Das vierte der o.g. Übertragungsräder 57 ist drehfest mit einer vierten Welle 58 verbunden, die über ein drittes Kegelrad 59 auf ein viertes Kegelrad 60 einwirkt. Letzteres ist wiederum drehfest mit einem ersten Kopplungsrad 61 verbunden. Insgesamt sind eine Mehrzahl von Kopplungsrädern 61 vorgesehen, die alle als Stirnräder ausgebildet sind, um eine antriebsübertragende Kopplung an die Schneidscheiben 11 der Schneidanordnung 10 herzustellen. Die Kopplungsräder 61 können als Teile des Schneid-Ausgangsteils 56 oder als Teile der Schneidanordnung 10 angesehen werden.

Aufgrund des Zusammenwirkens über das Planetengetriebe 45 ist eine Sekundär-Ausgangsgeschwindigkeit n4 des Sekundär-Ausgangsteils 53 sowohl von der Primär-Eingangsgeschwindigkeit n1 als auch von der Sekundär-Eingangsgeschwindigkeit n2 abhängig. Bei einer gegebenen Primär-Eingangsgeschwindigkeit n1 kann die Sekundär-Ausgangsgeschwindigkeit n4 verändert werden, indem die Sekundär-Eingangsgeschwindigkeit n1 angepasst wird. Daher kann die Betriebsgeschwindigkeit der Förderanordnung 20 variiert werden, während die Betriebsgeschwindigkeit der Schneidanordnung 10 konstant gehalten wird. Bspw. kann bei einem Ladewagenwechsel die Förderanordnung 20 angehalten werden, während gleichzeitig die Schneidanordnung 10 weiterläuft. Es ist auch möglich, bei weiterlaufender Schneidanordnung 10 die Laufrichtung der Förderanordnung 20 umzukehren, bspw. um eine Blockade zu verhindern oder aufzuheben. Schließlich ist es beim normalen Erntebetrieb möglich, das Verhältnis der Ausgangsgeschwindigkeiten n3, n4 anzupassen, um in Abhängigkeit von Art und Beschaffenheit des Erntegutes 81 einen optimalen Schneid- und Fördervorgang zu realisieren.

Bei der dargestellten Ausführungsform ist der Planetenträger 47 Teil des Förder-Ausgangsteils 54, während das Antriebsrad 52 mit dem Hohlrad 49 zusammenwirkt. Gemäß einer hier nicht dargestellten Variante könnte stattdessen das Hohlrad 49 zum Förder-Ausgangsteil 54 gehören, während das Antriebsrad 52 direkt oder indirekt mit dem Planetenträger 47 zusammenwirkt. Hierzu könnte entweder der Planetenträger 47 selbst eine Stirnverzahnung aufweisen oder es könnte ein axial zum Planetenträger 47 versetztes Trägerrad vorgesehen sein, welches mit dem Antriebsrad 52 kämmt und drehfest mit dem Planetenträger 47 verbunden ist.

## Patentansprüche

1. Vorsatzgerät (1) für eine Landmaschine (70), aufweisend einen Rahmen (2) sowie eine Schneidanordnung (10) zum Schneiden von Erntegut (81) und eine Förderanordnung (20) zum Fördern von Erntegut (81), die gegenüber dem Rahmen (2) antreibbar sind, sowie weiterhin eine Getriebeeinheit (30) mit einem Primär-Eingangsteil (31) zur antriebsübertragenden Kopplung an einen motorischen Primärantrieb (71), einem Sekundär-Eingangsteil (51) zur antriebsübertragenden Kopplung an einen motorischen Sekundärantrieb (27), einem Schneid-Ausgangsteil (56) zur antriebsübertragenden Kopplung an die Schneidanordnung (10), sowie einem Förder-Ausgangsteil (54) zur antriebsübertragenden Kopplung an die Förderanordnung (20),
**dadurch gekennzeichnet, dass**
einer der Ausgangsteile (54, 56) einen Primär-Ausgangsteil (55) bildet und der andere einen Sekundär-Ausgangsteil (53) bildet und die Getriebeeinheit (30) dazu ausgebildet ist, den Primär-Ausgangsteil (55) ausschließlich antriebsübertragend an den Primär-Eingangsteil (31) zu koppeln und den Sekundär-Ausgangsteil (53) gleichzeitig antriebsübertragend an beide Eingangsteile (31, 51) zu koppeln, so dass eine Ausgangsgeschwindigkeit (n4) des Sekundär-Ausgangsteils (53) von Eingangsgeschwindigkeiten (n1, n2) beider Eingangsteile (31, 48) abhängt.

2. Vorsatzgerät nach Anspruch 1, **dadurch gekennzeichnet, dass** der Schneid-Ausgangsteil (56) den Primär-Ausgangsteil (55) bildet und der Förder-Ausgangsteil (54) den Sekundär-Ausgangsteil (53) bildet.

3. Vorsatzgerät nach einem der vorangehenden Ansprüche, **dadurch gekennzeichnet, dass** die Ausgangsgeschwindigkeit (n4) des Sekundär-Ausgangsteils (53) bei laufendem Primärantrieb (71) durch den Sekundärantrieb (27) reduzierbar, bevorzugt auf Null reduzierbar, und/oder umkehrbar ist.

4. Vorsatzgerät nach einem der vorangehenden Ansprüche, **dadurch gekennzeichnet, dass** der Primär-Eingangsteil (31) eine Kupplung (4) aufweist, die zur lösbaren Verbindung mit einem bezüglich des Vorsatzgeräts (1) externen Primärantrieb (71) ausgebildet ist.

5. Vorsatzgerät nach einem der vorangehenden Ansprüche, **dadurch gekennzeichnet, dass** dieses den Sekundärantrieb (27) aufweist, welcher am Rahmen (2) montiert ist und/oder durch Energieübertragung von der Landmaschine (70) betreibbar ist.

6. Vorsatzgerät nach einem der vorangehenden Ansprüche, **dadurch gekennzeichnet, dass** die Getriebeeinheit (30) ein Kombinationsgetriebe (41) aufweist, welches ein antriebsübertragend an den Primär-Eingangsteil (31) gekoppeltes erstes Eingangselement (42) aufweist, ein antriebsübertragend an den Sekundär-Eingangsteil (51) gekoppeltes zweites Eingangselement (43), sowie ein Ausgangselement (44) des Sekundär-Ausgangsteils (53), welches wenigstens indirekt mit beiden Eingangselementen (42, 43) zusammenwirkt.

7. Vorsatzgerät nach einem der vorangehenden Ansprüche, **dadurch gekennzeichnet, dass** die Getriebeeinheit (30) ein Aufteilungsgetriebe (33) aufweist, welches antriebsübertragend an den Primär-Eingangsteil (31) sowie an das Kombinationsgetriebe (41) und den Primär-Ausgangsteil (55) gekoppelt ist und einen vom Primär-Eingangsteil (31) kommenden Kraftfluss aufteilt zwischen dem Kombinationsgetriebe (41) und dem Primär-Ausgangsteil (55).

8. Vorsatzgerät nach einem der vorangehenden Ansprüche, **dadurch gekennzeichnet, dass** das Aufteilungsgetriebe (33) eine Aufteilungswelle (34) aufweist, die einerseits antriebsübertragend an den Primär-Eingangsteil (31) und andererseits antriebsübertragend an den Primär-Ausgangsteil (55) gekoppelt ist und mit welcher ein erstes Aufteilungsrad (35) verbunden ist, welches mit einem zweiten Aufteilungsrad (36) zusammenwirkt und hierdurch antriebsübertragend an das Kombinationsgetriebe (41) gekoppelt ist.

9. Vorsatzgerät nach einem der vorangehenden Ansprüche, **dadurch gekennzeichnet, dass** das Kombinationsgetriebe (41) als Planetengetriebe (45) ausgebildet ist, welches ein Hohlrad (49), ein Sonnenrad (46) und eine Mehrzahl von an einem Planetenträger (47) gelagerten Planetenrädern (48) aufweist.

10. Vorsatzgerät nach einem der vorangehenden Ansprüche, **dadurch gekennzeichnet, dass** das Sonnenrad (46) antriebsübertragend an den Primär-Eingangsteil (31) gekoppelt ist.

11. Vorsatzgerät nach einem der vorangehenden Ansprüche, **dadurch gekennzeichnet, dass** der Sekundär-Ausgangsteil (53) den Planetenträger (47) oder das Hohlrad (49) aufweist.

12. Vorsatzgerät nach einem der vorangehenden Ansprüche, **dadurch gekennzeichnet, dass** der Sekundär-Eingangsteil (51) antriebsübertragend an das Hohlrad (49) oder an den Planetenträger (47) gekoppelt ist.

13. Vorsatzgerät nach einem der vorangehenden Ansprüche, **dadurch gekennzeichnet, dass** der Sekundär-Eingangsteil (51) ein mit dem Sekundärantrieb (27) drehfest verbundenes Antriebsrad (52) aufweist, welches wenigstens indirekt mit dem Hohlrad (49) oder mit dem Planetenträger (47) zusammenwirkt.

14. Vorsatzgerät nach einem der vorangehenden Ansprüche, **dadurch gekennzeichnet, dass** die Förderanordnung (20) eine Mehrzahl von einzeln gegenüber dem Rahmen (2) beweglichen Förderwerkzeugen aufweist und/oder die Schneidanordnung (10) eine Mehrzahl von einzeln gegenüber dem Rahmen (2) beweglichen Schneidwerkzeugen (11) aufweist.

15. Getriebeeinheit (30) für ein Vorsatzgerät (1) für eine Landmaschine (70), wobei die Getriebeeinheit (30) einen Primär-Eingangsteil (31) zur antriebsübertragenden Kopplung an einen motorischen Primärantrieb (27) aufweist, einen Sekundär-Eingangsteil (51) zur antriebsübertragenden Kopplung an einen motorischen Sekundärantrieb (71), einen Schneid-Ausgangsteil (56) zur antriebsübertragenden Kopplung an eine Schneidanordnung (10) des Vorsatzgeräts (1), sowie einen Förder-Ausgangsteil (54) zur antriebsübertragenden Kopplung an eine Förderanordnung (20) des Vorsatzgeräts (1),
**dadurch gekennzeichnet, dass**
einer der Ausgangsteile (54, 56) einen Primär-Ausgangsteil (55) bildet und der andere einen Sekundär-Ausgangsteil (53) bildet und die Getriebeeinheit (30) dazu ausgebildet ist, den Primär-Ausgangsteil (55) ausschließlich antriebsübertragend an den Primär-Eingangsteil (31) zu koppeln und den Sekundär-Ausgangsteil (53) gleichzeitig antriebsübertragend an beide Eingangsteile (31, 51) zu koppeln, so dass eine Ausgangsgeschwindigkeit (n4) des Sekundär-Ausgangsteils (53) von Eingangsgeschwindigkeiten (n1, n2) beider Eingangsteile (31, 48) abhängt.
